# EUROPEAN PATENT APPLICATION

(11) **EP 3 367 339 A1**
(43) Date of publication of application: **29.08.2018**
(21) Application number: 16857117.2
(22) Date of filing: 01.03.2016
(51) Int. Cl.: G07B 15/00, G06Q 30/04

(54) **SETTLEMENT SYSTEM**

(30) Priority: 22.10.2015 JP 2015208459
(71) Applicant: Shimano, Shunnosuke, Toshima-ku Tokyo 170-0005 (JP)
(72) Inventor: Shimano, Shunnosuke, Toshima-ku Tokyo 170-0005 (JP)
(74) Representative: v. Bezold & Partner Patentanwälte - PartG mbB
(86) International application number: PCT/JP2016/056148
(87) International publication number: WO 2017/068799

(57) **Abstract**

An objective of the present disclosure is to provide a payment system for realizing by means of a portable terminal a settlement environment capable of safe and easy settlement, without being restricted to a payment machine.

The present disclosure provides a payment system for executing settlement of goods or services, through a portable terminal of a user that receives the goods or services, the system comprising: a) setting means for setting as a settlement area a range in which a distance between an actual payment destination of the goods or services and the portable terminal is a prescribed distance; b) existence determination means for extracting the distance between the payment machine and the portable terminal, and determining whether or not the position of the portable terminal exists in the settlement area; and c) settlement environment supply means for generating a settlement manipulation screen through which settlement instruction information relating to the actual payment destination is input, in accordance with results of the existence determination, and realizing a settlement environment in the portable terminal.

## Description

### Technical Field

The present disclosure relates to a payment system for goods or services, and more particularly to a payment system that provides a settlement environment through a user's portable terminal.

### Background Art

In a variety of establishments, such as restaurants or the like, systems for ordering and paying through an actually existing window or payment machine (called a real payment destination) are widely used.

For example, at drive-through fast food restaurants, systems are widely used in which orders are placed in advance from a microphone disposed in advance of a product delivery window, the vehicle is caused to move to the product delivery window and settlement is done. Because with these systems, orders are placed orally, troubles and errors caused by mishearing or the like frequently occur.

In order to eliminate such problems, providing a payment machine and having orders placed and payment made through the user's manipulations could eliminate the above-described problems.

However, this is inconvenient, because when this format is introduced at drive-through restaurants, the user must exit the vehicle and stand in front of the payment machine in order to manipulate the payment machine.

This inconvenience does not arise if a settlement environment for taking orders and payment can be provided on a portable terminal possessed by the user. In addition, troubles such as mishearing or the like are also eliminated.

Considering this from a different perspective, even at the present point in time of the invention according to the present disclosure, systems have existed from before that provide settlement of goods or services from the Internet, using portable terminals. However, these were systems with a format that enabled settlement from pre-registered users regardless of where they were.

To users that are in an actual store and near a real payment destination, there were complicated systems such that settlement cannot be done if the user is not pre-registered, even if the user is at that location.

There has existed a need for realizing a settlement environment with the same ease of use as an actual payment machine, in a portable terminal such as the user's own smartphone or the like.

However, appropriately providing a settlement environment matching the goods or services the user actually uses was difficult. When unlimited remote control becomes possible, there is a fear of manipulation with malice or misrecognition. Conventional technology that resolves the above-described needs while taking into consideration problems of safety and security did not exist.

Prior art that resolves settlement troubles and inconvenience is disclosed in Patent Literature 1.

The art of Patent Literature 1 is art used in product purchases, by endowing an identification tag such as an IC card, an ID card or the like with a payment processing function, with the objective of room entrance management and exit management (or, clocking-in management and clocking-out management).

This is an automated payment system comprising a server capable of communication with a memory medium possessing a settlement function and a room entrance and exit function used at the purchase location in a specific establishment. The server comprises management means that recognizes at least one out of room entrance, room exit, building entrance and building exit and generates room entrance and exit information, on the basis of a room entrance and exit function of the memory medium; payment processing means that accomplishes payment processing at the purchase location in the specific establishment and generates payment information, on the basis of a payment function of the memory medium; detection means that detects an identifier specifying a registrant registered in the memory medium; and linking means that causes linking of the room entrance and exit information and the payment information, and the linking means accomplishes expense settlement of the registrant, through the difference or total of the entrance and exit information and the payment information, in expense processing in a prescribed period of the registrant.

However, the system disclosed in Patent Literature 1 has the problem that use is restricted to users having an identification tag. Moreover, in facilities in which a room entrance and exit management system has not been introduced, the system disclosed in Patent Literature 1 cannot be introduced, presenting the problem that establishment where such can be applied are restricted.

### Citation List

### Patent Literature

Patent Literature 1: Unexamined Japanese Patent Application Kokai Publication No. 2014-174958

### Summary of Invention

### Technical Problem

An objective of the present disclosure is to provide a payment system that eliminates troubles and inconvenience accompanying real orders and payments, and realizes a settlement environment where settlement can be accomplished safely and simply, through a portable terminal, without being constrained to a payment machine. In addition, another objective is to create a system that can provide a settlement environment capable of coexisting with payment machines installed from before.

### Solution to Problem

A first aspect of the present disclosure provides:
a payment system for executing settlement of goods or services, through a portable terminal of a user that receives the goods or services, the system comprising:
a) setting means for setting as a settlement area a range in which a distance between an actual payment destination of the goods or services and the portable terminal is a prescribed distance;
b) existence determination means for extracting the distance between the payment machine and the portable terminal, and determining whether or not the position of the portable terminal exists in the settlement area; and
c) settlement environment supply means for generating a settlement manipulation screen through which settlement instruction information relating to the actual payment destination is input, in accordance with results of the existence determination, and realizing a settlement environment in the portable terminal.

In addition, a second aspect of the present disclosure provides:
a payment system for executing settlement of goods or services, through a portable terminal of a user that receives the goods or services, the system comprising:
a) setting means for setting as a settlement area a range which a beacon from a beacon device corresponding to an actual payment destination for the goods or services reaches with a strength that is at least a prescribed threshold value;
b) existence determination means for receiving the beacon, analyzing the received beacon, extracting a transmitter ID and an electric field strength and making an existence determination of whether or not the position of the portable terminal exists in the settlement area, through whether or not the electric field strength of the beacon that is the transmitter is at least as great as the set threshold value; and
c) settlement environment supply means for generating a settlement manipulation screen through which settlement instruction information relating to the actual payment destination is input, in accordance with results of the existence determination, and realizing a settlement environment in the portable terminal.

Through these, a virtual settlement environment is provided through a portable terminal on condition (securing safety) of existing or not in a settlement area that is in a fixed correspondence relationship with an actual payment destination that really exists, enabling an increase in environments in which settlement is possible at lower cost than actually installing a payment machine, while guaranteeing uniform safety.

The above-described positioning may be positioning through information obtained by short-range communication between a short-range wireless device disposed in the above-described portable terminal and a short-range communication device disposed in the above-described settlement area.

The above-described positioning may be positioning through position information measured by a position detection device disposed in the above-described portable terminal.

Generation of the above-described settlement manipulation screen may further be generation in accordance with attributes of the user.

Settlement information from the above-described settlement environment and settlement information of the above-described payment machine may be synchronized. The settlement environment realized in the portable terminal is a so-called virtual payment machine. However, the existing payment machine really installed and the virtual payment machine can coexist without contradiction, by causing synchronization of settlement information such as settlement conclusion and the like of each. Through this, the same effects as installing payment machines can be obtained at very low cost compared to installing actual payment machines.

### Brief Description of Drawings

FIG. 1 is an overview diagram showing a configuration of a system according to a first exemplary embodiment;
FIG. 2 is a drawing showing details of a bicycle parking apparatus according to a bicycle parking service;
FIG. 3 is a drawing showing a functional configuration realized by a portable terminal possessed by a user;
FIG. 4 is a sequence diagram showing the chronological order of independent operations of a payment machine that is a beacon transmitter, a portable terminal and a billing server, and cooperative operations thereof;
FIG. 5 shows one example of a settlement manipulation screen;
FIG. 6 shows a screen that displays a list of a plurality of payment machines;
FIG. 7 shows an acknowledgement screen displayed on a display device of the portable terminal;
FIG. 8 shows a notification screen that notifies the user's portable terminal that settlement has concluded;
FIG. 9 is an overview diagram showing a configuration of a system according to a second exemplary embodiment;
FIG. 10 is an overview diagram showing a configuration of a system according to a third exemplary embodiment; and
FIG. 11 is a sequence diagram showing turns for providing goods or setting reservation rights, and actions of a billing process accompanying settlement.

### Description of Embodiments

Below, exemplary embodiments of the present disclosure are described with reference to the drawings.

In the exemplary embodiments, the various functional constituent elements realizing the functions of the present disclosure are realized by control programs such as pre-incorporated firmware or the like or applications stored in a memory device being executed by a processor of a portable terminal, a computer, circuits or the like, through cooperation with a device such as a positioning device or the like.

### Embodiment 1

### (Overview diagram showing positional relationship of constituent elements)

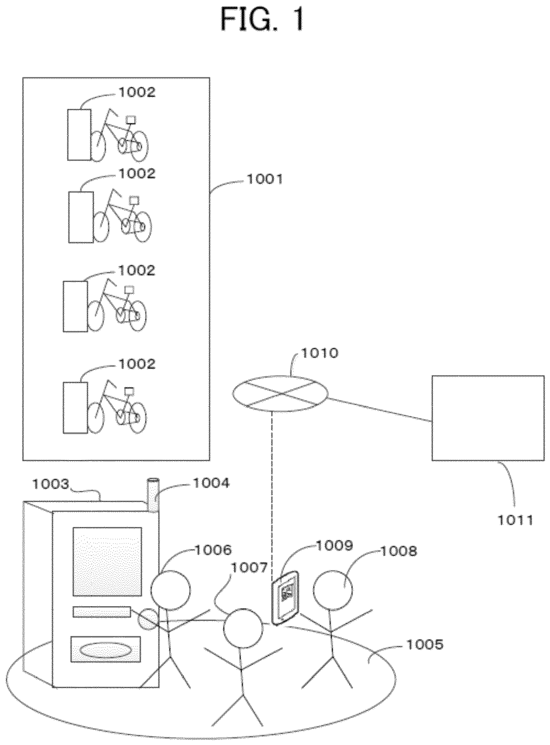

FIG. 1 is an overview diagram showing a configuration of a system according to a first exemplary embodiment.

A bicycle park 1001 is an establishment that accomplishes a service providing a bicycle parking establishment (hereafter called a bicycle parking service) that is goods or services targeted for settlement. In the establishment, a plurality of bicycle parking devices is provided, as indicated by a reference sign 1002.

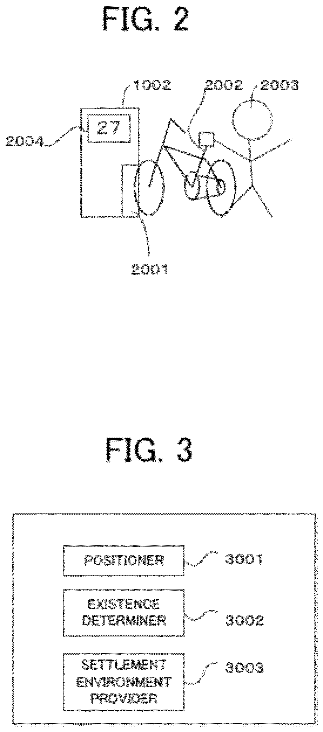

FIG. 2 is a drawing showing details of the bicycle parking device 1002. The bicycle parking device 1002 comprises a lock mechanism 2001 that stores a bicycle. Shown here is a situation in which a user 2003 is parking a bicycle 2002. Upon entering the bicycle parking device 1002, the bicycle 2002 is locked by the lock mechanism 2001 and stored. In addition, each bicycle parking device 1002 is assigned a device ID that identifies the device and is recorded in a memory device inside the system so that a user 2003, by designating in a payment device 1003, can specify provision of the bicycle parking service by the bicycle parking device. By visually confirming a display 2004 of the device ID, the user 2003 can acquire the identification information for the bicycle parking service the user is receiving.

Here, a bicycle parking service was utilized as the goods or services targeted for settlement, but this is intended to be illustrative and not limiting, the goods or services targeted for settlement may be providing a car park or providing products in an establishment that provides food and drink.

Returning now to a description of FIG. 1, the payment machine 1003 is an actual payment destination for settling the above-described bicycle parking service. In the payment machine, a beacon transmitting device 1004 not found in an ordinary payment machine is disposed, and is set such that radio waves of at least an electric field strength set as a threshold value reach a settlement area indicated by a reference sign 1005. In a beacon, a transmitter ID specifying the payment machine as the transmission source is included in beacon information. The settlement area 1005 is an area that is recognized through a portable terminal 1009 receiving the beacon and analyzing the beacon information and electric field strength.

A method in which a beacon is used in recognition of the settlement area was utilized, but recognition in the present disclosure is intended to be illustrated and not limited thereby. A method that compares the positon of the real payment destination and self-position through positioning by CNSS, GPS or the like, or a method that specifies a distance between the real payment destination and the portable terminal through short-range wireless communication may also be appropriately utilized. In addition, in the explanation above, only one payment machine is shown in the drawing, but a system including a plurality of payment machines is utilized. Naturally, the system of the present disclosure is not limited to a plurality, for a system that has only one payment machine as shown in the drawing can also be utilized.

Users 1006, 1007 and 1008 indicate users who have stopped at the payment machine in order to settle. Here, there are three users for one payment machine, so two are waiting.

If the user 1008 causes the portable terminal 1009 held by that user to enter the above-described settlement area 1005, settlement can be made through manipulation on a settlement manipulation screen display that emulates manipulation of the payment machine. A smartphone is utilized as the portable terminal 1009.

In this exemplary embodiment, a screen that emulated actual payment machine manipulation was utilized, but the settlement manipulation screen that can be utilized in the present disclosure is not limited to this. The screen can be appropriately altered, such as utilizing a settlement manipulation screen in accordance with manipulation properties or the like of the portable terminal being utilized.

The display of the settlement manipulation screen and the function of receiving manipulation of the display are realized by causing operation of a settlement application installed on the smartphone. Here, a smartphone was utilized as the user's portable terminal, but any communication terminal with which implementation of a beacon-receiving function or the like and manipulation of the display are possible can be appropriately utilized.

A billing server 1011 is provided so as to be capable of communication with the portable terminal 1009 via a network 1010.

In the billing server 1011, ID information for identifying the payment machines supported by the system is recorded in a memory device or the like. As identification information identifying the bicycle parking service provided by each of the payment machines, a device ID is associated with the payment machine ID and recorded.

Here, the billing server utilizes a configuration of communicating from the outside via a network, but the setup of the billing server according to the present disclosure is not limited to this. A configuration may also be appropriately utilized in which the billing server is built into the payment machine 1003 that is the real payment destination, and communicates wirelessly with the portable terminal.

### (Functional configuration in which the portable terminal is realized by executing applications or the like)

FIG. 3 is a drawing showing a functional configuration realized by the portable terminal 1009.

A positioner 3001 receives the beacon, analyzes the received beacon, and extracts the transmitter ID and the distance to the transmitter or the electric field strength.

An existence determiner 3002 determines whether or not the portable terminal 1009 exists in the settlement area, through whether or not the portable terminal 1009 is within a prescribed distance from the payment machine or the electric field strength of the beacon of which the payment machine is the transmitter is within the range of a set threshold value.

A settlement environment provider 3003 generates a settlement manipulation screen emulating manipulation of the payment machine that is the transmitter of the beacon creating the settlement area, and displays such on the smartphone display.

Here, a screen that emulates manipulation of the actual payment machine is utilized, but the settlement manipulation screen usable in the present disclosure is not limited thereto. A settlement manipulation screen in accordance with the manipulation properties or the like of the portable terminal utilized may be appropriately utilized.

Furthermore, the screen may be such that when existence in a plurality of settlement areas is determined, a display of icons or the like providing notification of such or a list is displayed.

### (Sequence diagram showing system operations with the flow of time)

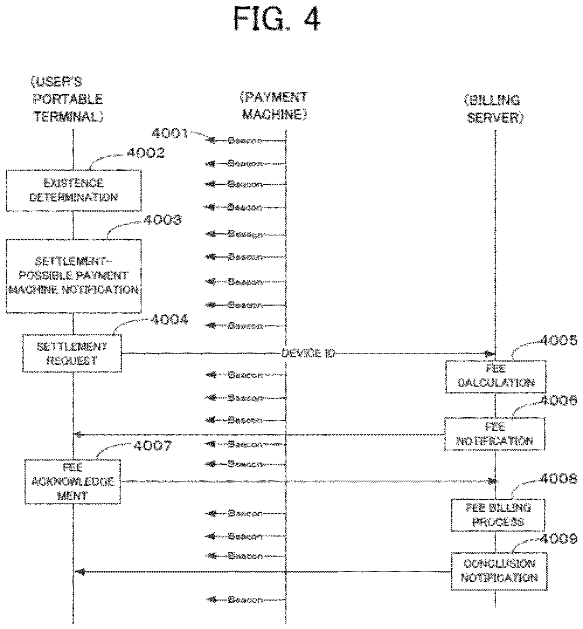

FIG. 4 is a sequence diagram showing the chronological order of independent operations of the payment machine 1003 that is the beacon transmitter, the portable terminal 1009 and the billing server 1011, and cooperative operations thereof.

A reference sign 4001 indicates a beacon of which the payment machine is the transmitter. The beacon including beacon information including the transmitter ID is ordinarily transmitted at fixed time intervals.

In an existence determination step 4002, the portable terminal receives the beacon indicated by the reference sign 4001, analyzes the beacon information and the electric field strength, and determines whether or not the portable terminal exists in the settlement area.

Here, a format through a beacon is utilized in existence determination, but a format in which the position of the portable terminal 1009 through positioning by GNSS, GPS or the like and a prerecorded position of the payment machine 1003 are compared, or a format in which the distance between the payment machine 1003 and the portable terminal 1009 is determined through short-range wireless communication, may be appropriately utilized.

When the result of the existence determination is "No", the existence determination step 4002 is repeated with a prescribed period.

When the result of the determination is "exists", the action of the portable terminal moves to a settlement-possible payment machine notification step 4003. Here, through the settlement environment provider 3002 of the portable terminal, a settlement manipulation screen linked to manipulation of the actual payment machine is displayed on the display device of the portable terminal, by emulating the settlement manipulation panel of the payment machine.

Here, a screen that emulated manipulation of the actual payment machine is utilized, but settlement manipulation screens that can be utilized in the present disclosure are not limited thereto. A settlement manipulation screen in accordance with the manipulation properties or the like of the portable terminal utilized can be appropriately utilized.

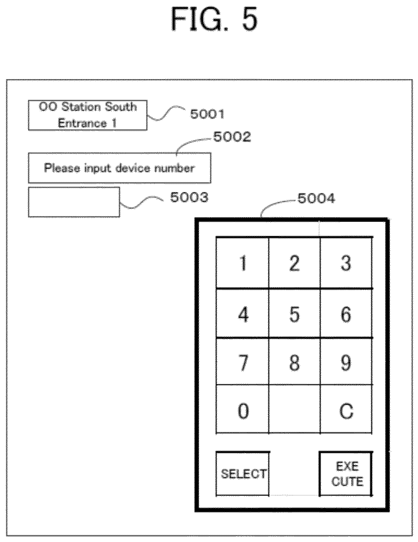

FIG. 5 shows one example of a settlement manipulation screen. A reference sign 5001 indicates a name identifying the actual payment machine corresponding to the virtual settlement manipulation screen. A reference sign 5002 indicates a message display prompting input of a device number in order to specify a bicycle parking service that is the target of settlement. An input space 5003 is generated on the screen such that by the user touching a ten key icon 5004, a device number is input the same as manipulating an actual ten key. The device number is the device ID indicated by the reference sign 2004 in FIG. 2.

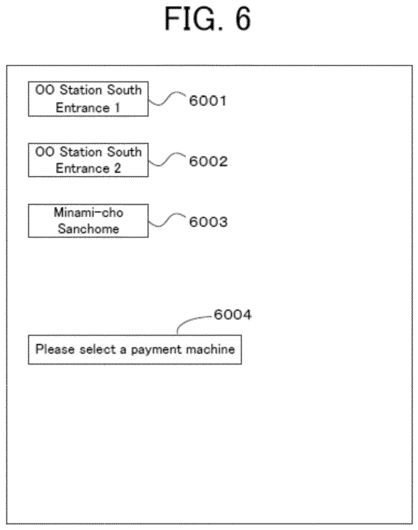

When an existence determination is made for a plurality of settlement areas, a screen displaying a list of a plurality of payment machines is generated as shown in FIG. 6, by the settlement environment provider 3002, and is displayed on the display device of the portable terminal. In FIG. 6, reference signs 6001 through 6003 indicate names of payment machines falling under existence determinations, and the user can select these by touching them. A reference sign 6004 indicates a message display that prompts manipulation by the user. When the user's selection manipulation is done, a settlement manipulation screen corresponding to the selected payment machine is generated the same as in FIG. 5, and is displayed on the display device of the portable terminal.

Returning to the description of FIG. 4, when a device ID is input by the user and the execution button of the ten key is touched in the settlement-possible payment machine notification step 4003, the system's action moves to a settlement request step 4004. Here, request information including the device ID is transmitted to the billing server 1011 from the portable terminal.

In a fee calculation step 4005, the billing server 1011 communicates with the payment machine 1003 through a communication circuit not particularly represented in the drawing, acquires the bicycle parking start time according to the device ID and accomplishes calculation of the fee in accordance with preset fee calculation rules.

In a fee notification step 4006, a fee that is the result of the above-described calculation is communicated to the portable terminal 1009 via the network 1010, by the billing server 1011.

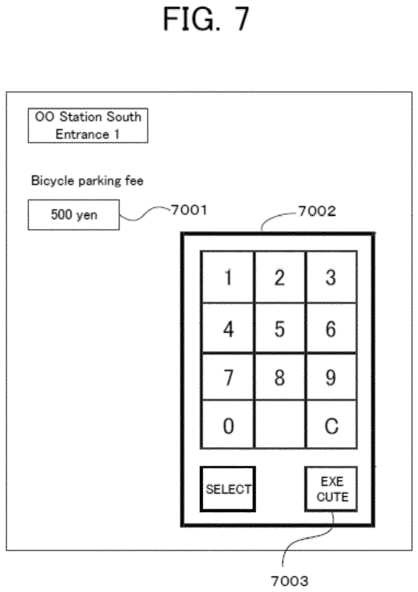

In a fee acknowledgement step 4007, an acknowledgement screen such as the one shown in FIG. 7 is generated by the settlement environment provider 3002 and is displayed on the display device of the portable terminal. When the user confirms a displayed fee 7001 and desires to execute settlement, the user touches an execution button 7003 on a ten key panel 7002. Receiving this touch, the settlement environment provider 3002 transmits a request for fee settlement process execution to the billing server 1011.

In a fee billing processing step 4008, the billing server 1011 executes the fee billing process for the user. Here, billing information is communicated to a server of a credit company with which the user has contracted in advance, and a response to the effect that this clears the credit limit is awaited.

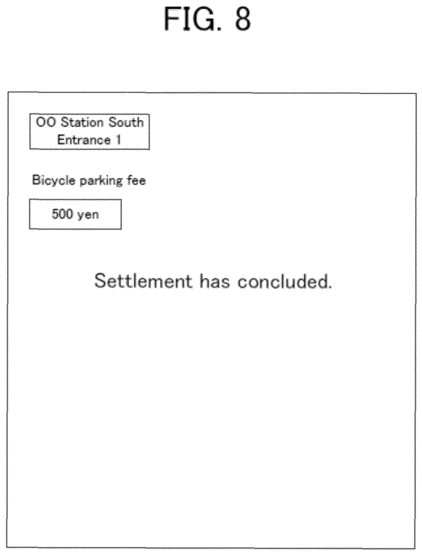

When the fee billing process succeeds, in a conclusion notification step 4009, the user is notified on the portable terminal that settlement has concluded. FIG. 8 shows this notification screen.

Information relating to the fee billing process by the billing server is transmitted to the payment machine 1003, along with the device ID of the bicycle parking device relating to the bicycle parking service. The payment machine 1003 that has received this transmits an unlock signal and the lock mechanism of the corresponding bicycling parking device unlocks. Through this, the user can remove the bicycle, and the bicycle parking service concludes.

### Embodiment 2

In a second exemplary embodiment, technological items that have already been described in the first exemplary embodiment are omitted, and items unique to the second exemplary embodiment are primarily explained.

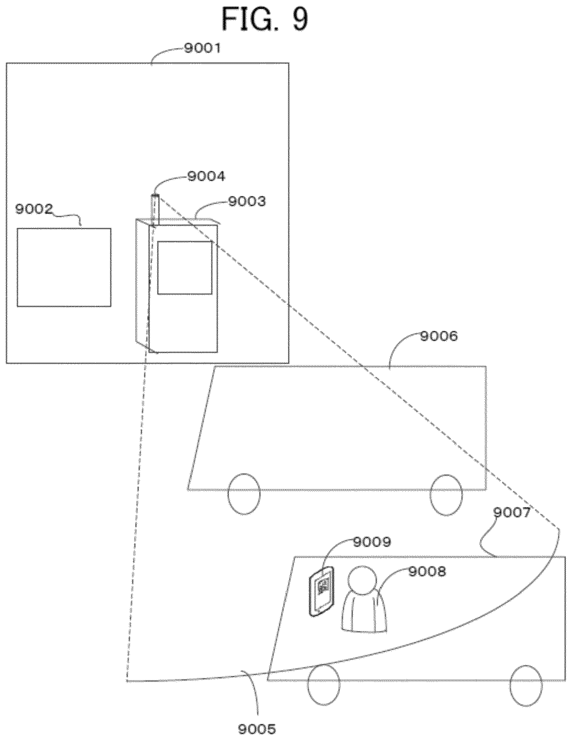

FIG. 9 is an overview diagram showing a configuration of a system according to the second exemplary embodiment.

A restaurant 9001 is a drive-through establishment that provides fast food that is the goods or services that are the target of settlement. In order to transfer the goods to a user who is still driving an automobile, a product delivery window indicated by a reference sign 9002 is disposed.

Here, fast food sales are utilized as the goods or services that are the target of settlement, but this is intended to be illustrative and not limiting, for the goods or services that can be provided under this format can be appropriately changed.

A payment machine 9003 is an actual payment destination for doing the above-described fast food settlement. In the payment machine, a beacon transmitting device 9004 not found in an ordinary payment machine is provided, and is set so that radio waves of at least an electric field strength set as a threshold value arrive in a settlement area indicated by a reference sign 9005. Here, a sender ID specifying the payment machine as the transmission source is included in beacon information in the beacon. A settlement area 9005 is an area that is recognized, by a portable terminal provided with the same functions as described in the first exemplary embodiment receiving the beacon and analyzing the beacon information and electric field strength.

Here, a format in which the beacon is used in recognition of the settlement area was utilized, but recognition in the present disclosure is not limited to this. A format in which the position of the portable terminal through positioning by GNSS, GPS or the like and the position of the real payment destination are compared, or a format in which the distance between the real payment destination and the portable terminal is determined through short-range wireless communication, may be appropriately utilized.

In addition, for convenience in the description, only one payment machine is shown in the drawing, but a system that includes a plurality of payment machines is utilized. Naturally, the system of the present disclosure is not limited to a plurality, and a system with only one payment machine as shown in the drawing can also be utilized.

Automobiles 9006 and 9007 indicate automobiles that stop by the payment machine in order to purchase fast food. Here, there are two automobiles at one payment machine, so one automobile is in a waiting status.

A user 9008 riding in the automobile 9007 that is waiting can make settlement through manipulation of a settlement manipulation screen display that emulates manipulation of the settlement machine, if a portable terminal 9009 the user holds is caused to enter the above-described settlement area 9005. Here, a smartphone is utilized as the portable terminal 9009.

A screen that emulates manipulation of the actual payment machine is utilized, but settlement manipulation screens usable in the present disclosure are not limited to this. A settlement manipulation screen in accordance with the manipulation properties or the like of the portable terminal utilized can be appropriately used.

In addition, display of the settlement manipulation screen and functions that receive manipulation on the display are realized by causing a settlement application installed on the smartphone to operate. Here, a smartphone is utilized as the user's portable terminal, but any communication terminal in which a beacon reception function or the like is implemented and with which manipulation on the display is possible can be appropriately utilized.

The billing process accompanying settlement and actions of the settlement manipulation screen displayed on the portable terminal 9009 are the same as in the first exemplary embodiment, and a settlement manipulation screen in accordance with product name and properties can be appropriately utilized.

### Embodiment 3

In a third exemplary embodiment, technological items that have already been described in the first exemplary embodiment or the second exemplary embodiment are omitted, and items unique to the third exemplary embodiment are primarily explained.

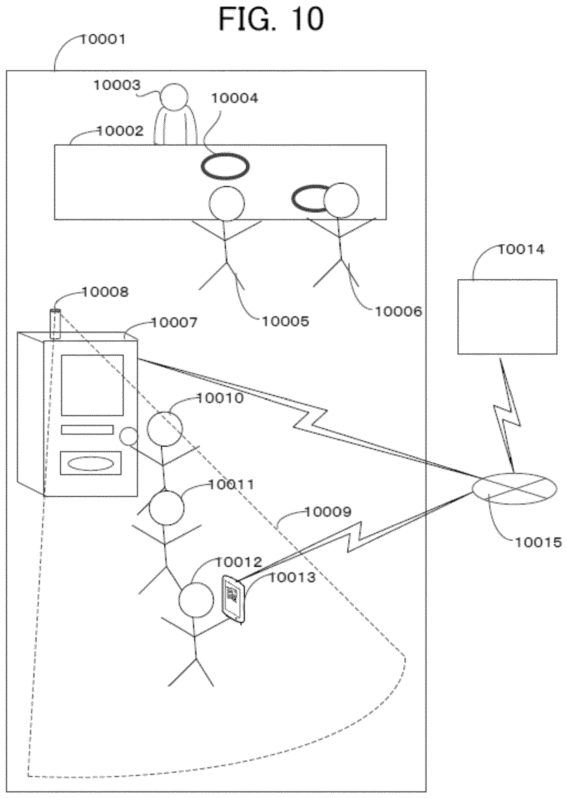

FIG. 10 is an overview diagram showing a configuration of a system according to the third exemplary embodiment.

A restaurant 10001 is an establishment that provides ramens as the goods or services targeted for settlement. A store employee hands the product to a customer, and a counter table 10002 is provided for the customer to dine. Here, a situation in which a store employee 10003 is handing a ramen 10004 to a customer 10005 across the counter table is shown. A customer 10006 is already dining.

Here, ramens are utilized as the goods or services that are the target of settlement, but this is intended to be illustrative and not limiting, for any goods or services that can be provided in this kind of format can be appropriately utilized.

A payment machine 10007 is an automatic ticket machine that sells meal tickets of the above-described restaurant, and is an actual payment destination of the present disclosure. The automatic ticket machine is provided with a beacon transmitting device 10008 that is not found in an ordinary automatic ticket machine, and a beacon transmission strength and transmission direction are set so that radio waves of at least an electric field strength set as a threshold value reach a settlement area indicated by a reference sign 10009. In the beacon, a transmitter ID that specifies the automatic ticket machine as the transmission source is included in the beacon information. The settlement area 10009 is an area that is recognized, through a portable terminal provided with the same functions as described in the first exemplary embodiment receiving the beacon and analyzing the beacon information and electric field strength.

Here, a format in which the beacon is used in recognition of the settlement area was utilized, but recognition in the present disclosure is not limited to this. A format in which the position of the portable terminal through positioning by GNSS, GPS or the like and the position of the real settlement destination are compared, or a format in which the distance between the real settlement destination and the portable terminal is determined through short-range wireless communication, may be appropriately utilized.

In addition, for convenience in the description, only one automatic ticket machine is shown in the drawing, but a system that includes a plurality of payment machines may be utilized.

A customer 10010 is on the verge of buying a meal ticket such as ramens or the like. A customer 10011 is a customer waiting, forming a line in order to purchase a meal ticket. A customer 10012 is a customer at the back of the line, but is holding a portable terminal 10013.

The functional configuration of the portable terminal is the same as in the first exemplary embodiment.

As for the customer 10012, if the portable terminal 10013 being held exists in the above-described settlement area 10009, through manipulation of a ticket purchase manipulation screen display linked with a manipulation screen of the automatic ticket machine, purchasing a meal ticket or acquiring a reservation for making a purchase, and securing a supply turn for a product such as ramens or the like, are possible. Here, a smartphone is utilized as the portable terminal 10013.

The ticket purchase manipulation screen utilizes a screen emulating manipulation of a real automatic ticket machine, but the ticket purchase manipulation screen utilizable in the present disclosure is not limited to this. A manipulation screen linked to the screen of the automatic ticket machine, in accordance with the manipulation properties or the like of the portable terminal utilized, can be appropriately utilized.

In addition, display of the ticket purchase manipulation screen and the function of receiving manipulation on the display are realized by causing operation of applications installed on the smartphone.

Here, a smartphone was utilized as the customer's portable terminal, but any communication terminal capable of implementing a beacon reception function or the like and manipulation of a display can be appropriately utilized.

A reservation and billing server 10014 is disposed so as to be capable of communication with the portable terminal 10013, via a network 10015.

In the reservation and billing server 10014, ID information identifying the settlement machines supported by this system is recorded in a memory device or the like, and a meal ticket ID is recorded associated with a payment machine ID, as identifying information identifying services provided by each payment machine.

The reservation and billing server utilizes a configuration that communicates from the outside, via a network. However, installation of the reservation and billing server of the present disclosure is not limited to this, for a configuration in which the reservation and billing server is built into the payment machine 10007 that is the real payment destination and communicates wirelessly with the portable terminal can be appropriately utilized.

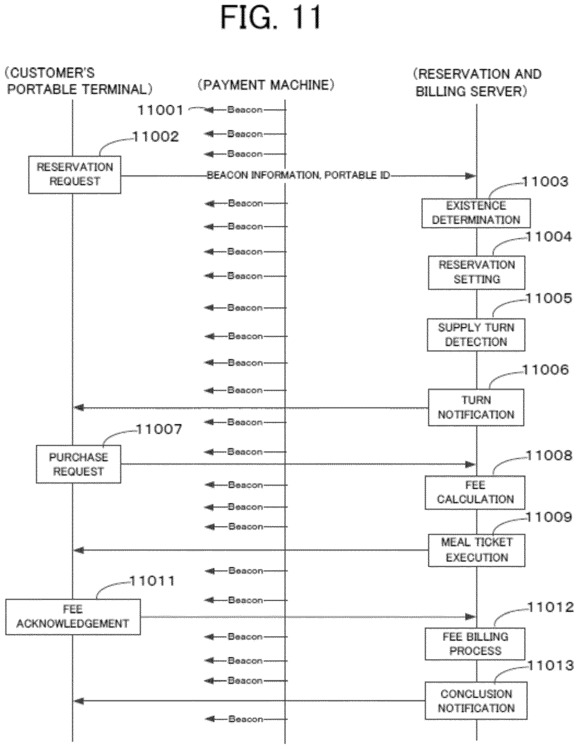

FIG. 11 is a sequence diagram showing a sequence of providing goods, and actions of a billing process accompanying setting of reservation rights and settlement.

The chronological order of the independent actions of the payment machine 10007 that is the beacon transmitter, the portable terminal 10013, and the reservation and billing server 10014, and the cooperative actions of these, are shown.

A reference sign 11001 is a beacon of which the payment machine is the transmitter. A beacon possessing beacon information including the transmitter ID is ordinarily transmitted at fixed time intervals.

In a reservation request step 11002, the customer accesses the reservation and billing server from the customer's portable terminal 10013, and transmits reservation request information including the ID of the portable terminal, the electric field strength of the beacon and the beacon information. The composition of the beacon information is the same as in the first exemplary embodiment.

In an existence determination step 11003, the reservation and billing server analyzes the ID and beacon information and electric field strength received from the portable terminal and determines whether or not the portable terminal exists in the settlement area.

When the result of the existence determination is "No", reservations and settlement cannot be done. Through this, the effect is to guarantee that a customer at that location can attempt to make reservations or do settlement, and to prevent unfairness such as forgery through remote manipulation or the like.

When the result of the determination is "exists", the action of the reservation and billing server moves to a reservation setting step 11004. Here, a right to purchase a meal ticket with the portable terminal after a preset wait time has elapsed is set. Through this, a meal ticket can be purchased from the portable terminal in the order corresponding to the order in which the customer lined up, without cutting between customers standing in a real line; a virtual settlement environment can be provided while securing fairness to the customers in the real line; and efficient meal ticket sales eliminating the effort of lining up in a real line can be realized.

### (Variation)

Here, a format is utilized in which reservation setting is possible in the above-described "exists" case, but a format may also be utilized in which a customer that has made a reservation remotely from the Internet or the like in advance can purchase a meal ticket from outside the store in the case of "existence" in a settlement area set as far as outside the store, broader than the settlement area 10009 of FIG. 10.

By utilizing this kind of format, the restaurant can provide goods or services with sales only to customers that are close to a fixed range, even if reservations are made remotely. Customers can acquire meal tickets efficiently, eliminating the labor and time to make purchases at a ticket machine inside the store.

In a supply turn detection step 11005, the reservation and billing server detects the passing of the preset wait time by referencing a timer inside the system.

Here, a format referencing a timer is utilized, but supply turn detection in the present disclosure is not limited to this. A format may also be utilized in which store employees observe circumstances within the store, and transmit the fact that the supply turn has come to the reservation and billing server from a communication terminal installed in the counter.

When elapsing of the wait time is detected, in a supply turn detection step 11006, a supply turn detection message providing notification that meal ticket purchasing is possible is transmitted to the portable terminal.

Here, an email containing a link to a ticket purchase manipulation screen display is transmitted as the supply turn notification message.

In a purchase request step 11007, the customer clicks the link in the above-described communicated email displayed on the portable terminal, displaying the ticket purchase manipulation screen. In the ticket purchase manipulation screen display, by doing a purchase request manipulation linked to manipulation of the automatic ticket machine, request information including the desired product is transmitted to the reservation and billing server 10014 from the portable terminal. In a fee calculation step 11008, the reservation and billing server 10014 communications with the payment machine 10007 via a network 10015 and accomplishes calculation of the fee in accordance with the request information.

In a meal ticket execution step 11009, the fee that is the result of the above-described calculation and meal ticket information are transmitted to the portable terminal 10013 via the network 10015.

In a fee acknowledgement step 11011, when the customer confirms the display fee and meal ticket information, and desires to execute settlement, payment manipulation linked to manipulation of the automatic ticket machine is accomplished and a request for fee settlement process execution is transmitted to the reservation and billing server 10014.

In a fee billing process step 11012, the reservation and billing server 10014 executes a fee billing process for the user.

When the fee billing process is successful, in a conclusion notification step 11013, the fact that settlement was concluded is communicated to the user's portable terminal.

The information according to the fee billing process of the billing server is transmitted to a communication device installed in the counter. A store employee at the counter completes the goods or services of the system by providing ramen or the like in accordance with the meal ticket to the customer relating to the fee billing process.

The exemplary embodiments disclosed herein are to be regarded in an illustrative rather than a restrictive sense. This detailed description, therefore, is not to be taken in a limiting sense, and the scope of the invention is defined only by the included claims, along with the full range of equivalents to which such claims are entitled.

This application claims the benefit of Japanese Patent Application No. 2015-208459, the entire disclosure of which is incorporated by reference herein.

### Industrial Applicability

The invention disclosed in the present disclosure is applicable to an establishment providing goods or services for which fee settlement is necessary, or to virtual extension of a payment machine installed in a town.

### Reference Signs List

2001 Restaurant equipped with a drive-through
2003 Payment machine
2004 Beacon transmitter
2005 Settlement area
2009 Portable terminal

## Claims

1. A payment system for executing settlement of goods or services, through a portable terminal of a user that receives the goods or services, the system comprising:
a) setting means for setting as a settlement area a range in which a distance between an actual payment destination of the goods or services and the portable terminal is a prescribed distance;
b) existence determination means for extracting the distance between the actual payment destination and the portable terminal, and determining whether or not the position of the portable terminal exists in the settlement area; and
c) settlement environment supply means for generating a settlement manipulation screen through which settlement instruction information relating to the actual payment destination is input, in accordance with results of the existence determination, and realizing a settlement environment in the portable terminal.

2. A payment system for executing settlement of goods or services, through a portable terminal of a user that receives the goods or services, the system comprising:
a) setting means for setting as a settlement area a range which a beacon from a beacon device corresponding to an actual payment destination for the goods or services reaches with a strength that is at least a prescribed threshold value;
b) existence determination means for receiving the beacon, analyzing the received beacon, extracting a transmitter ID and an electric field strength and making an existence determination of whether or not the position of the portable terminal exists in the settlement area, through whether or not the electric field strength of the beacon that is the transmitter is at least as great as the set threshold value; and
c) settlement environment supply means for generating a settlement manipulation screen through which settlement instruction information relating to the actual payment destination is input, in accordance with results of the existence determination, and realizing a settlement environment in the portable terminal.

3. The system according to claim 1 or claim 2, wherein the actual payment destination is a payment machine for the goods or services.

4. The system according to claim 3, wherein settlement information from the settlement environment and settlement information from the payment machine are synchronized.
